(19) Europäisches Patentamt
European Patent Office
Office européen des brevets

(11) EP 0 595 770 B1

(12) EUROPÄISCHE PATENTSCHRIFT

(45) Veröffentlichungstag und Bekanntmachung des Hinweises auf die Patenterteilung:
**14.01.1998 Patentblatt 1998/03**

(51) Int Cl.[6]: **C07F 9/177**, C10M 137/10

(21) Anmeldenummer: **93810742.2**

(22) Anmeldetag: **21.10.1993**

# (54) Neue Dithiophosphate als Verschleissschutzadditive

Novel dithiophosphates as antiwear additives

Nouveaux dithiophosphates comme additifs anti-usure

(84) Benannte Vertragsstaaten:
**DE FR GB IT**

(30) Priorität: **30.10.1992 CH 3388/92**

(43) Veröffentlichungstag der Anmeldung:
**04.05.1994 Patentblatt 1994/18**

(73) Patentinhaber: **Ciba Specialty Chemicals Holding Inc.**
**4057 Basel (CH)**

(72) Erfinder:
- **Camenzind, Hugo, Dr.**
  **CH-3014 Bern (CH)**
- **Dubs, Paul, Dr.**
  **CH-1723 Marly (CH)**

(56) Entgegenhaltungen:
**WO-A-88/00589** **FR-A- 2 176 993**

EP 0 595 770 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die vorliegende Erfindung betrifft neue Dithiophosphate sowie Zusammensetzungen enthaltend einen Schmierstoff, eine Hydraulik- oder Metallbearbeitungsflüssigkeit und mindestens ein solches Dithiophosphat.

Der Betrieb von Motoren erfordert eine Schmierung der bewegten Metallteile. Insbesondere in Verbrennungsmotoren sind die Druck- und Temperaturverhältnisse besonders drastisch, und es werden hohe Anforderungen an den Schmierstoff gestellt.

Phosphor- und schwefelhaltige Verbindungen haben sich als vorteilhaft erwiesen, um die Bildung und Erhaltung eines schmierenden Films auf den Metalloberflächen zu gewährleisten.

Es ist bekannt, Schmiermitteln Dithiophosphate zuzusetzen, welche die bewegten Metallteile vor Abnutzung und Verschleiß schützen sowie zur Stabilisierung des Schmiermittels selbst beitragen. Zumeist werden Zinkdialkyldithiophosphate verwendet. Bei modernen Verbrennungsmotoren mit nachgeschaltetem Abgasreinigungskatalysator bereitet der Metallgehalt dieser Öladditive allerdings Probleme. Durch Veraschung kann die Lebensdauer des Katalysators empfindlich verringert werden.

Man sucht daher in der Industrie verstärkt nach wirksamen metall- und damit aschefreien Verschleißschutzmitteln.

Ein weiteres Problem, das vermieden werden sollte, ist eine korrodierende Wirkung des Additivs auf Kupfer und seine Legierungen.

Bekannt ist die Verwendung von Produkten aus der Umsetzung von Dithiophosphorsäuren mit Alkenen, Acryl- und Maleinsäurederivaten als Additive für Schmiermittel. [S.B. Borshchevskii et al., Khim Tekhnolog. Topl. Masel (6) 24-6 (1991)]

Überraschenderweise wurde nun gefunden, daß sich die im folgenden beschriebenen Verbindungen der Formeln I, II und m sehr gut als Verschleißschutzmittel, insbesondere für Schmieröle, eignen und kaum korrodierende Wirkung auf Kupfer aufweisen.

Die Erfindung betrifft daher Verbindungen der Formel I, II oder III

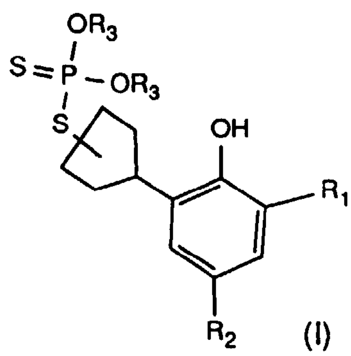

(I)

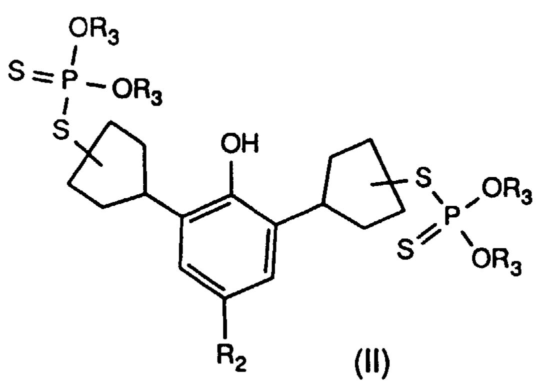

(II)

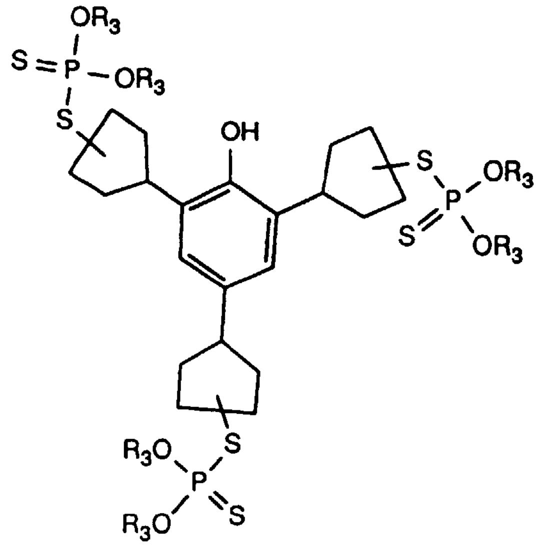

(III)

worin

$R_1$ Wasserstoff, $C_1$-$C_{20}$-Alkyl oder $C_5$-$C_7$-Cycloalkyl,
$R_2$ Wasserstoff, $C_1$-$C_{20}$-Alkyl oder $C_5$-$C_7$-Cycloalkyl und
$R_3$ $C_1$-$C_{18}$-Alkyl oder $C_3$-$C_{18}$-Alkenyl sind.

$R_1$ und $R_2$ in der Bedeutung von $C_{1-20}$Alkyl können gerad- oder verzweigtkettig sein und sind beispielsweise Methyl (Me), Ethyl, Propyl, Isopropyl (i-Pr), n-Butyl, Isobutyl (i-Bu), t-Butyl (t-Bu), Pentyl, Isopentyl, Hexyl, Heptyl, 3-Heptyl, Octyl, 2-Ethylhexyl, Nonyl, Decyl, Undecyl, Dodecyl, Tridecyl, Tetradecyl, Pentadecyl, Hexadecyl, Heptadecyl, Octadecyl, 2-Ethylbutyl, 1-Methylpentyl, 1,3-Dimethylbutyl, 1,1,3,3-Tetramethylbutyl, 1-Methylhexyl, Isoheptyl, 1-Methylheptyl, 1,1,3-Trimethylhexyl, 1-Methylundecyl oder Eicosyl.

$R_1$ und $R_2$ als $C_5$-$C_7$-Cycloalkyl bedeuten Cyclopentyl, Cyclohexyl und Cycloheptyl.

Als $C_3$-$C_{18}$Alkenyl ist $R_3$ ebenfalls gerad- oder verzweigtkettig, z.B. Allyl, 2-Methallyl, 2-Butenyl, 3-Butenyl, Isobutenyl, n-Penta-2,4-dienyl, 3-Methyl-but-2-enyl, Hexenyl, n-Oct-2-enyl, n-Dec-2-enyl, n-Dodec-2-enyl, iso-Dodecenyl, n-Octadec-2-enyl, n-Octadec-4-enyl, Undecenyl, Heptadecenyl oder Oleyl.

Bevorzugt sind $R_1$ Wasserstoff oder $C_1$-$C_{12}$-Alkyl, $R_2$ Wasserstoff oder $C_1$-$C_{12}$-Alkyl und $R_3$ $C_1$-$C_{12}$-Alkyl oder $C_3$-$C_8$-Alkenyl.

Bevorzugt sind ferner Verbindungen der Formel I.

Besonders bevorzugt sind Verbindungen, bei denen $R_1$ und $R_2$ unabhängig voneinander Wasserstoff oder $C_1$-$C_{12}$Alkyl sind und $R_3$ $C_1$-$C_{12}$-Alkyl ist.

Ganz besonders bevorzugt sind Verbindungen der Formel I worin, $R_1$ und $R_2$ Wasserstoff oder $C_1$-$C_4$-Alkyl sind und $R_3$ $C_1$-$C_4$-Alkyl ist. Dabei sind $R_1$ oder/und $R_2$ vorzugsweise Methyl.

Die Erfindung betrifft ferner Zusammensetzungen enthaltend

A) einen Schmierstoff, eine Hydraulik- oder Metallbearbeitungsflüssigkeit und
B) mindestens eine Verbindung der Formel I, II oder III. Oben genannte bevorzugte Verbindungen bilden entsprechend bevorzugte Zusammensetzungen.

Weiterhin bevorzugt sind solche Zusammensetzungen, worin die unter A) aufgeführte Komponente ein Schmierstoff ist.

Die Aufgabe des Schmiermittels beim Betrieb von Motoren besteht nicht nur in der Schmierung der bewegten Teile, sondern auch im Schutz der mit dem Schmieröl in Berührung stehenden Teile, beispielsweise vor Verschleiß und Korrosion.

Dem Schutz vor Abnutzung und Verschleiß dienen die Verbindungen der Formeln I, II oder III, die in den erfindungsgemäßen Zusammensetzungen zweckmäßig zu 0,01 bis 10, beispielsweise zu 0,05 bis 5, vorzugsweise zu 0,05 bis 3, insbesondere jedoch zu 0,1 bis 2 Gew.-% vorliegen sollen. Es kann sich dabei um eine oder mehrere dieser Verbindungen handeln, und die Gewichtsprozentangaben beziehen sich auf die gesamte Menge dieser Verbindungen.

Berechnungsgrundlage ist dabei das Gesamtgewicht des Schmierstoffes bzw. der Metallbearbeitungs- oder Hydraulikflüssigkeit ohne die Verbindungen der Formeln I, II oder III.

Selbstverständlich können auch Mischungen von Verbindungen der Formeln I, II und III eingesetzt werden.

Die Erfindung betrifft daher auch die Verwendung von Verbindungen der Formeln I, II oder III als Zusatzstoffe in Schmierstoffen, Hydraulik- und Metallbearbeitungsflüssigkeiten, insbesondere als Hochdruck- und Verschleißschutzadditive. Da es beim Gebrauch des Schmierstoffes auch auf die Verschleißschutzwirkung ankommt, bedeutet eine solche Verwendung auch ein Verfahren zur Verbesserung der Gebrauchseigenschaften von Schmierstoffen, Metallbearbeitungs- und Hydraulikflüssigkeiten, dadurch gekennzeichnet, daß diesen Verbindungen der Formel I, II oder III zugesetzt werden.

Die in Frage kommenden Schmierstoffe, Metallbearbeitungs- und Hydraulikflüssigkeiten basieren beispielsweise auf mineralischen oder synthetischen Ölen oder Mischungen davon. Die Schmierstoffe sind dem Fachmann geläufig und in der einschlägigen Fachliteratur, wie beispielsweise in Dieter Klamann, "Schmierstoffe und verwandte Produkte" (Verlag Chemie, Weinheim, 1982), in Schewe-Kobek, "Das Schmiermittel-Taschenbuch" (Dr. Alfred Hüthig-Verlag, Heidelberg, 1974) und in "Ullmanns Enzyklopädie der technischen Chemie", Bd. 13, Seiten 85-94 (Verlag Chemie, Weinheim, 1977) beschrieben.

Die Schmierstoffe sind insbesondere Öle und Fette, beispielsweise basierend auf einem Mineralöl. Bevorzugt sind Öle.

Eine weitere Gruppe von Schmierstoffen, die zur Anwendung gelangen können, sind pflanzliche oder tierische Öle, Fette, Talge und Wachse oder deren Gemische untereinander oder Gemische mit den erwähnten mineralischen oder synthetischen Ölen.

Pflanzliche und tierische Öle, Fette, Talge und Wachse sind beispielsweise Palmkernöl, Palmöl, Olivenöl, Rüböl, Rapsöl, Leinöl, Erdnußöl, Sojabohnenöl, Baumwollöl, Sonnenblumenöl, Kürbiskernöl, Kokosnußöl, Maisöl, Rizinusöl, Baumnußöl und Mischungen davon, Fischöle, Talge von Schlachttieren wie Rindertalg, Klauenfett und Knochenöl sowie deren modifizierte, epoxidierte und sulfoxidierte Formen, beispielsweise epoxidiertes Sojabohnenöl.

Die Mineralöle basieren insbesondere auf Kohlenwasserstoffverbindungen.

Beispiele von synthetischen Schmierstoffen umfassen Schmierstoffe auf der Basis der aliphatischen oder aromatischen Carboxylester, der polymeren Ester, der Polyalkylenoxide, der Phosphorsäureester, der Poly-$\alpha$-olefine oder der Silicone, eines Diesters einer zweiwertigen Säure mit einem einwertigen Alkohol, wie z.B. Dioctylsebacat oder Dinonyladipat, eines Triesters von Trimethylolpropan mit einer einwertigen Säure oder mit einem Gemisch solcher Säuren, wie z.B. Trimethylolpropantripelargonat, Trimethylolpropan-tricaprylat oder Gemische davon, eines Tetraesters von Pentaerythrit mit einer einwertigen Säure oder mit einem Gemisch solcher Säuren, wie z.B. Pentaerythrit-tetracaprylat, oder eines komplexen Esters von einwertigen und zweiwertigen Säuren mit mehrwertigen Alkoholen, z. B. ein komplexer Ester von Trimethylolpropan mit Capryl- und Sebacinsäure oder von einem Gemisch davon. Besonders geeignet sind neben Mineralölen z.B. Poly-$\alpha$-Olefine, Schmierstoffe auf Esterbasis, Phosphate, Glykole, Polyglykole und Polyalkylenglykole, sowie deren Mischungen mit Wasser.

Metallbearbeitungsflüssigkeiten und Hydraulikflüssigkeiten können auf Basis der gleichen Substanzen hergestellt werden wie vorstehend für die Schmiermittel beschrieben. Häufig handelt es sich dabei auch um Emulsionen solcher Substanzen in Wasser oder anderen Flüssigkeiten.

Erfindungsgemäße Schmierstoffzusammensetzungen finden z.B. Verwendung in Verbrennungsmotoren, z.B. in Kraftfahrzeugen.

Die Verbindungen der Formeln I, II oder III sind gut in Schmierstoffen, Metallbearbeitungs- und Hydraulikflüssigkeiten löslich und sind deshalb als Zusätze zu Schmierstoffen, Metallbearbeitungs- und Hydraulikflüssigkeiten besonders geeignet, und es ist besonders auf ihre überraschend gute verschleißhemmende Wirkung hinzuweisen.

Die erfindungsgemäßen Schmierstoffe, Metallbearbeitungs- und Hydraulikflüssigkeiten können zusätzlich andere Additive enthalten, die zugegeben werden, um ihre Grundeigenschaften noch weiter zu verbessern; dazu gehören: weitere Antioxidantien, Metallpassivatoren, Rostinhibitoren, Viskositätsindex-Verbesserer, Stockpunkterniedriger, Dispergiermittel, Detergentien, weitere Hochdruck-Zusätze und Antiverschleiß-Additive.

Es folgen Beispiele solcher weiteren Zusatzstoffe:

Beispiele für phenolische Antioxidantien

1. Alkylierte Monophenole, z.B. 2,6-Di-tert.butyl-4-methylphenol, 2-Tert.butyl-4,6-dimethylphenol, 2,6-Di-tert.butyl-4-ethylphenol, 2,6-Di-tert.butyl-4-n-butylphenol, 2,6-Di-tert.butyl-4-i-butylphenol, 2,6-Di-cyclopentyl-4-methylphenol, 2-($\alpha$-Methylcyclohexyl)-4,6-dimethylphenol, 2,6-Di-octadecyl-4-methylphenol, 2,4,6-Tri-cyclohexylphenol, 2,6-Di-tert.butyl-4-methoxymethylphenol, 2,6-Di-nonyl-4-methylphenol, 2,4-Dimethyl-6-(1'-methyl-undec-1'-yl)-phenol, 2,4-Dimethyl-6-(1'-methyl-heptadec-1'-yl)-phenol, 2,4-Dimethyl-6-(1'-methyl-tridec-1'-yl)-phenol und Mischungen davon.

2. Alkylthiomethylphenole, z.B. 2,4-Di-octylthiomethyl-6-tert.-butylphenol, 2,4-Di-octylthiomethyl-6-methylphenol, 2,4-Di-octylthiomethyl-6-ethylphenol, 2,6-Di-dodecylthiomethyl-4-nonylphenol.

3. Hydrochinone und alkylierte Hydrochinone, z.B. 2,6-Di-tert.butyl-4-methoxyphenol, 2,5-Di-tert.butyl-hydrochinon, 2,5-Di-tert.amyl-hydrochinon, 2,6-Diphenyl-4-octadecyloxyphenol, 2,6-Di-tert.-butyl-hydrochinon, 2,5-Di-tert.-butyl-4-hydroxyanisol, 3,5-Di-tert.-butyl-4-hydroxyanisol, 3,5-Di-tert.-butyl-4-hydroxyphenyl-stearat, Bis-(3,5-di-tert.-butyl-4-hydroxyphenyl)adipat.

4. Hydroxylierte Thiodiphenylether, z.B. 2,2'-Thio-bis-(6-tert-butyl-4-methylphenol), 2,2'-Thio-bis-(4-octylphenol), 4,4'-Thio-bis-(6-tert.butyl-3-methylphenol), 4,4'-Thio-bis-(6-tert.butyl-2-methylphenol), 4,4'-Thio-bis-(3,6-di-sec.-amylphenol), 4,4'-Bis-(2,6-dimethyl-4-hydroxyphenyl)-disulfid.

5. Alkyliden-Bisphenole, z.B. 2,2'-Methylen-bis-(6-tert.butyl-4-methylphenol), 2,2'-Methylen-bis-(6-tert.butyl-4-ethylphenol), 2,2'-Methylen-bis-[4-methyl-6-(α-methylcyclohexyl)-phenol], 2,2'-Methylen-bis-(4-methyl-6-cyclohexylphenol), 2,2'-Methylen-bis-(6-nonyl-4-methylphenol), 2,2'-Methylen-bis-(4,6-di-tert.butylphenol), 2,2'-Ethyliden-bis-(4,6-di-tert.butylphenol), 2,2'-Ethyliden-bis-(6-tert.butyl-4-isobutylphenol), 2,2'-Methylen-bis-[6-(α-methylbenzyl)-4-nonylphenol], 2,2'-Methylen-bis-[6-(α,α-dimethylbenzyl)-4-nonylphenol], 4,4'-Methylen-bis-(2,6-di-tert.-butylphenol), 4,4'-Methylen-bis-(6-tert.butyl-2-methylphenol), 1,1-Bis-(5-tert.butyl-4-hydroxy-2-methylphenyl)-butan, 2,6-Bis-(3-tert.butyl-5-methyl-2-hydroxybenzyl)-4-methylphenol, 1,1,3-Tris-(5-tert.butyl-4-hydroxy-2-methylphenyl)-butan, 1,1-Bis-(5-tert.butyl-4-hydroxy-2-methyl-phenyl)-3-n-dodecylmercaptobutan, Ethylenglycol-bis-[3,3-bis-(3'-tert.-butyl-4'-hydroxyphenyl)-butyrat], Bis-(3-tert.butyl-4-hydroxy-5-methyl-phenyl)-dicyclopentadien, Bis-[2-(3'-tert.butyl-2'-hydroxy-5'-methyl-benzyl)-6-tert.butyl-4-methyl-phenyl]-terephthalat, 1,1-Bis-(3,5-dimethyl-2-hydroxyphenyl)-butan, 2,2-Bis-(3,5-di-tert.-butyl-4-hydroxyphenyl)-propan, 2,2-Bis-(5-tert.-butyl-4-hydroxy-2-methylphenyl)-4-n-dodecylmercapto-butan, 1,1,5,5-Tetra-(5-tert.-butyl-4-hydroxy-2-methylphenyl)-pentan.

6. O-, N- und S-Benzylverbindungen, z.B. 3,5,3',5'-Tetra-tert.-butyl-4,4'-dihydroxydibenzylether, Octadecyl-4-hydroxy-3,5-dimethylbenzyl-mercaptoacetat, Tris-(3,5-di-tert.-butyl-4-hydroxybenzyl)-amin, Bis-(4-tert.-butyl-3-hydroxy-2,6-dimethylbenzyl)-dithioterephthalat, Bis-(3,5-di-tert.-butyl-4-hydroxybenzyl)-sulfid, Iso-octyl-3,5-di-tert.-butyl-4-hydroxybenzyl-mercaptoacetat.

7. Hydroxybenzylierte Malonate, z.B.
Dioctadecyl-2,2-bis-(3,5-di-tert.-butyl-2-hydroxybenzyl)-malonat, Di-octadecyl-2-(3-tert.-butyl-4-hydroxy-5-methylbenzyl)-malonat, Di-dodecylmercaptoethyl-2,2-bis-(3,5-di-tert.-butyl-4-hydroxybenzyl)-malonat, Di-[4-(1,1,3,3-tetramethylbutyl)-phenyl]-2,2-bis-(3,5-di-tert.-butyl-4-hydroxybenzyl)-malonat.

8. Hydroxybenzyl-Aromaten, z.B. 1,3,5-Tris-(3,5-di-tert.-butyl-4-hydroxybenzyl)-2,4,6-trimethylbenzol, 1,4-Bis-(3,5-di-tert.-butyl-4-hydroxybenzyl)-2,3,5,6-tetramethylbenzol, 2,4,6-Tris-(3,5-di-tert.-butyl-4-hydroxybenzyl)-phenol.

9. Triazinverbindungen, z.B. 2,4-Bis-octylmercapto-6-(3,5-di-tert.-butyl-4-hydroxy-anilino)-1,3,5-triazin, 2-Octylmercapto-4,6-bis-(3,5-di-tert.-butyl-4-hydroxyanilino)-1,3,5-triazin, 2-Octylmercapto-4,6-bis-(3,5-di-tert.-butyl-4-hydroxyphenoxy)-1,3,5-triazin, 2,4,6-Tris-(3,5-di-tert.-butyl-4-hydroxyphenoxy)-1,2,3-triazin, 1,3,5-Tris-(3,5-di-tert.-butyl-4-hydroxybenzyl)-isocyanurat, 1,3,5-Tris-(4-tert.-butyl-3-hydroxy-2,6-dimethylbenzyl)-isocyanurat, 2,4,6-Tris-(3,5-di-tert.-butyl-4-hydroxyphenylethyl)-1,3,5-triazin, 1,3,5-Tris-(3,5-di-tert.butyl-4-hydroxyphenylpropionyl)-hexahydro-1,3,5-triazin, 1,3,5-Tris-(3,5-dicyclohexyl-4-hydroxybenzyl)-isocyanurat.

10. Benzylphosphonate, z.B. Dimethyl-2,5-di-tert.-butyl-4-hydroxybenzylphosphonat, Diethyl-3,5-di-tert.-butyl-4-hydroxybenzylphosphonat, Dioctadecyl-3,5-di-tert.-butyl-4-hydroxybenzylphosphonat, Dioctadecyl-5-tert.-butyl-4-hydroxy-3-methylbenzylphosphonat, Ca-Salz des 3,5-Di-tert.-butyl-4-hydroxybenzyl-phosphonsäure-monoethylesters.

11. Acylaminophenole, z.B. 4-Hydroxy-laurinsäureanilid, 4-Hydroxystearinsäureanilid, N-(3,5-di-tert.butyl-4-hydroxyphenyl)-carbaminsäureoctylester.

12. Ester der β-(3,5-Di-tert.butyl-4-hydroxyphenyl)-propionsäure mit ein- oder mehrwertigen Alkoholen, wie z.B. mit Methanol, Ethanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxyethyl)-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

13. Ester der β-(5-tert.Butyl-4-hydroxy-3-methylphenyl)-propionsäure mit ein- oder mehrwertigen Alkoholen, wie z.B. mit Methanol, Ethanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N, N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

14. Ester der β-(3,5-Dicyclohexyl-4-hydroxyphenyl)-propionsäure mit ein- oder mehrwertigen Alkoholen, wie z.B. mit Methanol, Ethanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

15. Ester der 3,5-Di-tert.-buty-4-hydroxyphenylessigsäure mit ein- oder mehrwertigen Alkoholen, wie z.B. mit Methanol, Ethanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

16. Amide der β-(3,5-(-Di-tert.butyl-4-hydroxyphenyl)-propionsäure, wie z.B. N,N'-Bis-(3,5-di-tert-butyl-4-hydroxyphenylpropionyl)-hexamethylendiamin, N,N'-Bis-(3,5-di-tert-butyl-4-hydroxyphenylpropionyl)-trimethylendiamin, N,N'-Bis-(3,5-di-tert.butyl-4-hydroxyphenylpropionyl)-hydrazin.

Beispiele für aminische Antioxidantien:

N,N'-Di-isopropyl-p-phenylendiamin, N,N'-Di-sec-butyl-p-phenylendiamin, N,N'-Bis-(1,4-dimethyl-pentyl)-p-phenylendiamin, N,N'-Bis(1-ethyl-3-methyl-pentyl)-p-phenylendiamin, N,N'-Bis(1-methyl-heptyl)-p-phenylendiamin, N,N'-Dicyclohexyl-p-phenylendiamin, N,N'-Diphenyl-p-phenylendiamin, N,N'-Di-(naphthyl-2)-p-phenylendiamin, N-Isopropyl-N'-phenyl-p-phenylendiamin, N-(1,3-Dimethyl-butyl)-N'-phenyl-p-phenylendiamin, N-(1-Methyl-heptyl)-N'-phenyl-p-phenylendiamin, N-Cyclohexyl-N'-phenyl-p-phenylendiamin, 4-(p-Toluol-sulfonamido)-diphenylamin, N,N'-Dimethyl-N,N'-di-sec-butyl-p-phenylendiamin, Diphenylamin, N-Allyldiphenylamin, 4-Isopropoxy-diphenylamin, N-Phenyl-1-naphthylamin, N-Phenyl-2-naphthylamin, octyliertes Diphenylamin, z.B. p,p'-Di-tert-octyldiphenylamin, 4-n-Butylaminophenol, 4-Butyrylamino-phenol, 4-Nonanoylamino-phenol, 4-Dodecanoylamino-phenol, 4-Octadecanoylamino-phenol, Di-(4-methoxyphenyl)-amin, 2,6-Di-tert-butyl-4-dimethylamino-methylphenol, 2,4'-Diamino-diphenylmethan, 4,4' -Diamino-diphenylmethan, N,N,N',N'-Tetramethyl-4,4'-diaminodiphenylmethan, 1,2-Di-[(2-methyl-phenyl)-amino]-ethan, 1,2-Di-(phenylamino)-propan, (o-Tolyl)-biguanid, Di-[4-(1',3'-dimethyl-butyl)-phenyl]amin, tert-octyliertes N-Phenyl-1-naphthylamin, Gemisch aus mono- und dialkylierten tert-Butyl/tert-Octyldiphenylaminen, Gemisch aus mono- und dialkylierten Isopropyl/Isohexyl-diphenylaminen, Gemische aus mono- und dialkylierten tert--Butyldiphenylaminen, 2,3-Dihydro-3,3-dimethyl-4H-1,4-benzothiazin, Phenothiazin, N-Allylphenothiazin, N,N,N',N'-Tetraphenyl-1,4-diaminobut-2-en, N,N-Bis-(2,2,6,6-tetramethyl-piperidin-4-yl-hexamethylendiamin, Bis-(2,2,6,6-tetramethylpiperidin-4-yl)-sebacat, 2,2,6,6-Tetramethylpiperidin-4-on, 2,2,6,6-Tetramethylpiperidin-4-ol.

Beispiele für weitere Antioxidantien:

Aliphatische oder aromatische Phosphite, Ester der Thiodipropionsäure oder der Thiodiessigsäure, oder Salze der Dithiocarbamid- oder Dithiophosphorsäure, 2,2,12,12-Tetramethyl-5,9-dihydroxy-3,7,11-trithiatridecan und 2,2,15,15-Tetramethyl-5,12-dihydroxy-3,7,10,14-tetrathiahexadecan.

Beispiele für Metall-Desaktivatoren, z.B. für Kupfer, sind:

a) Bentriazole und deren Derivate, z.B. 4- oder 5-Alkylbenztriazole (z.B. Tolutriazol) und deren Derivate, 4,5,6,7-Tetrahydrobenztriazol, 5,5'-Methylenbis-benztriazol; Mannich-Basen von Benztriazol oder Tolutriazol wie 1-[Di(2-ethylhexyl)aminomethyl)-tolutriazol und 1-[Di(2-ethylhexyl)aminomethyl)-benztriazol; Alkoxyalkylbentriazole wie 1-(Nonyloxymethyl)-benztriazol, 1-(1-Butoxyethyl)-bentriazol und 1-(1-Cyclohexyloxybutyl)-tolutriazol.

b) 1,2,4-Triazole und deren Derivate, z.B. 3-Alkyl (oder Aryl)- 1,2,4-Triazole, Mannich-Basen von 1,2,4-Triazolen

wie 1-[Di(2-ethylhexyl)aminomethyl-1,2,4-triazol; Alkoxyalkyl-1,2,4-triazole wie 1-(1-Butoxyethyl-1,2,4-triazol; acylierte 3-Amino-1,2,4-triazole.

c) Imidazolderivate, z.B. 4,4'-Methylenbis(2-undecyl-5-methylimidazol, Bis[(N-methyl)imidazol-2-yl]carbinol-octylether.

d) Schwefelhaltige heterocyclische Verbindungen, z.B. 2-Mercaptobenzthiazol, 2,5-Dimercapto-1,3,4-thiadiazol und deren Derivate;
3,5-Bis[di(2-ethylhexyl)amino-methyl]-1,3,4-thiadiazolin-2-on.

e) Aminoverbindungen, z.B. Salicyliden-propylendiamin, Salicylaminoguanidin und deren Salze.

<u>Beispiele für Rost-Inhibitoren sind:</u>

a) Organische Säuren, ihre Ester, Metallsalze, Aminsalze und Anhydride, z.B. Alkyl- und Alkenyl-bernsteinsäuren und deren Partialester mit Alkoholen, Diolen oder Hydroxycarbonsäuren, Partialamide von Alkyl- und Alkenylbernsteinsäuren, 4-Nonylphenoxyessigsäure, Alkoxy- und Alkoxyethoxycarbonsäuren wie Dodecyloxyessigsäure, Dodecyloxy(ethoxy)-essigsäure und deren Aminsalze, ferner
N-Oleoyl-sarcosin, Sorbitan-mono-oleat, Blei-naphthenat, Alkenylbernsteinsäureanhydride, z.B. Dodecenylbernsteinsäure-anhydrid, 2-(2-Carboxymethyl)- 1-dodecyl-3-methylglycerin und dessen Amin-Salze.
b) Stickstoffhaltige Verbindungen, z.B.:

I. Primäre, sekundäre oder tertiäre aliphatische oder cycloaliphatische Amine und Amin-Salze von organischen und anorganischen Säuren, z.B. öllösliche Alkylammoniumcarboxylate, ferner 1-[N,N-bis-(2-hydroxyethyl) amino]-3-(4-nonylphenoxy)-propan-2-ol.

II. Heterocyclische Verbindungen, z.B.:
Substituierte Imidazoline und Oxazoline, 2-Heptadecenyl-1-(2-hydroxyethyl)-imidazolin.

c) Phosphorhaltige Verbindungen, z.B.:
Aminsalze von Phosphorsäurepartialestern oder Phosphonsäurepartialestern, Zinkdialkyldithiophosphate.
d) Schwefelhaltige Verbindungen, z.B.:
Barium-dinonylnaphthalin-sulfonate, Calciumpetroleum-sulfonate, Alkylthio- substituierte aliphatische Carbonsäuren, Ester von aliphatischen 2-Sulfocarbonsäuren und deren Salze.
e) Glycerinderivate, z.B.:
Glycerin-monooleat, 1-(Alkylphenoxy)-3-(2-hydroxyethyl)glycerine, 1-(Alkylphenoxy)-3-(2,3-dihydroxypropyl)glycerine, 2-Carboxyalkyl-1,3-dialkylglycerine.

<u>Beispiele für Viskositätsindex-Verbesserer sind:</u>

Polyacrylate, Polymethacrylate, Vinylpyrrolidon/Methacrylat-Copolymere, Polyvinylpyrrolidone, Polybutene, Olefin-Copolymere, Styrol/Acrylat-Copolymere, Polyether.

<u>Beispiele für Stockpunkterniedriger sind:</u>

Polymethacrylat, alkylierte Naphthalinderivate.

<u>Beispiele für Dispergiermittel/Tenside sind:</u>

Polybutenylbernsteinsäureamide oder -imide, Polybutenylphosphonsäurederivate, basische Magnesium-, Calcium-, und Bariumsulfonate und -phenolate.

<u>Beispiele für Verschleißschutz-Additive sind:</u>

Schwefel und/oder Phosphor und/oder Halogen enthaltende Verbindungen, wie geschwefelte Olefine und pflanzliche Öle, Zinkdialkyldithiophosphate, Tritolylphosphat, Tricresylphosphat, chlorierte Paraffine, Alkyl- und Aryldi- und tri-sulfide, Aminsalze von Mono- und Dialkylphosphaten, Aminsalze der Methylphosphonsäure, Diethanolaminomethyltolyltriazol, Di(2-ethylhexyl)aminomethyltolyltriazol, Derivate des 2,5-Dimercapto-1,3,4-thiadiazols, 3-[(Bis-isopropyloxy-phosphinothioyl)thio]-propionsäureethylester, Triphenylthiophosphat (Triphenylphosphorothioat), Tris(alkylphenyl)phosphorothioate und deren Gemische, (z.B. Tris(isononylphenyl)phosphorothioat), Diphenyl-monononylphenyl-phosphorothioat, Isobutylphenyl-diphenyl-phosphorothioat, Dodecylaminsalz des 3-Hydroxy-1,3-thiaphosphetan-3-oxids, Trithiophosphorsäure-5,5,5-tris[isooctylacetat (2)], Derivate von 2-Mercaptobenzthiazol wie 1-[N,N-Bis (2-ethylhexyl)aminomethyl-2-mercapto- 1H-1,3-benzthiazol, Ethoxycarbonyl-5-octyl-dithiocarbamat.

Die Herstellung der erfmdungsgemäßen Verbindungen erfolgt nach an sich bekannten Verfahren durch Addition von Dithiophosphorsäure-O,O-diestern an (2-Cyclopenten-1-yl)-phenole, wie anhand der Verbindungen der Formel I exemplarisch dargestellt:

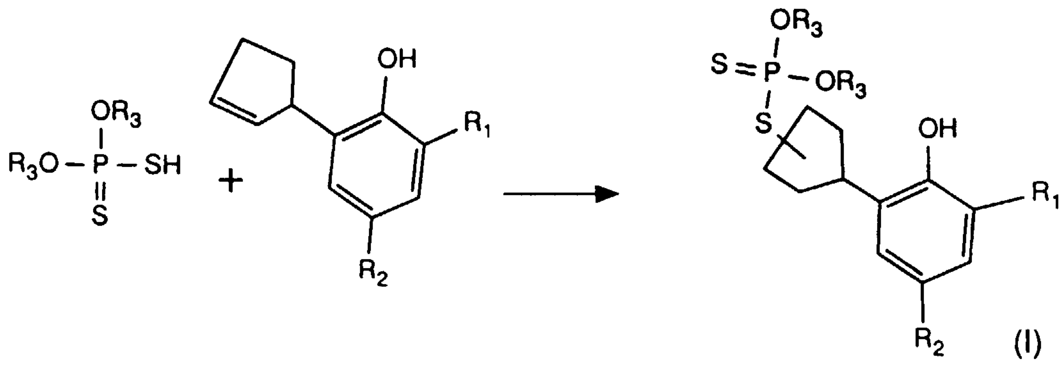

(I)

Mit 2 oder 3 Aequivalenten Thiophosphorsäure werden die Verbindungen der Formeln II und III aus den entsprechenden 2- oder 3-fach 2-Cyclopenten-1-yl-substituierten Phenolen hergestellt.

Man geht zweckmäßig in Anlehnung an Standardmethoden für die Addition von Mercaptanen an Olefine vor, wie sie zum Beispiel in Organikum, S. 343 beschrieben ist. In Houben Weyl, Methoden der Organischen Chemie, Bd XII/ 2 S 709 ff. heißt es u.a.:

*"Bei der praktischen Durchführung der Anlagerung von Dithiophosphorsäure-O,O-diestern an olefinische Verbindungen geht man im allgemeinem so vor, daß man Gemische stöchiometrischer Mengen der Komponenten auf Temp. zwischen 50 und 100°C erwärmt, bis der Aciditätsgrad nicht weiter abnimmt. Die Reaktionen verlaufen oft exotherm und können gegebenenfalls durch Zusatz eines Lösungsmittels gesteuert werden. Verschiedentlich werden basische Stoffe, wie Alkalien oder tertiäre Amine (Triäthylamin, Picolin usw.) empfohlen."*

Bevorzugt wird ohne Lösungsmittel gearbeitet, wenn nötig, kann jedoch ein solches verwendet werden. Die Reaktion bedarf normalerweise keines Katalysators, kann jedoch durch beispielsweise Azoisobutyronitril beschleunigt werden. Temperaturen zwischen 60 und 120°C sind zweckmäßig. Die Reaktionszeiten richten sich nach der Größe des Ansatzes und den weiteren Reaktionsbedingungen, liegen aber gewöhnlich bei Labormaßstab zwischen 6 und 20 Stunden.

(2-Cyclopenten-1-yl)-phenole sind nach an sich bekannten Verfahren herstellbar, wie z.B in US 3,689,573 beschrieben. Dort werden insbesondere 1- und 2-fach mit 2-Cyclopenten substituierte Phenole beschrieben. Die Friedel-Crafts-Reaktion wird durch Katalysatoren wie Aluminiumverbindungen oder Zeolithe beschleunigt. Cyclopentadien wird in der handelsüblichen, dimeren Form eingesetzt. Bei Einsatz eines ca. 5-fachen molaren Überschusses an Cyclopentadien erhält man beispielsweise ein Gemisch, in dem das 3-fach substituierte 2,4,6-(2-Cyclopenten-1-yl)-phenol zu ca. 60% vorliegt. Durch übliche (z.B. chromatographische) Trennmethoden erhält man das reine Produkt, das mit dem Dithiophosphorsäure-O,O-diester umgesetzt werden kann.
Die entsprechenden Dithiophosphorsäure-O,O-diester sind im Handel erhältlich oder nach bekannten Verfahren herzustellen.

Die folgenden Beispiele erläutern die Erfindung weiter. Alle Angaben in Prozenten oder Teilen beziehen sich auf das Gewicht, sofern nicht anders angegeben.

Beispiel 1:

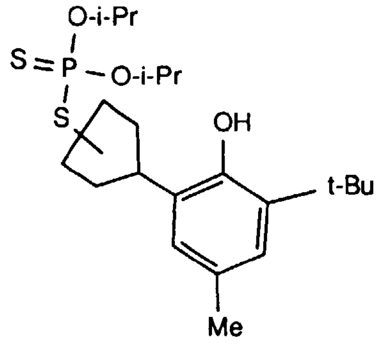

Unter Stickstoff werden 23.5 g (0.1 mol) 2-tert-Butyl-6-(2-cyclopenten-1-yl)-4-methylphenol und 22.1 g (0.1 mol) Diisopropyldithiophosphorsäure innerhalb von 15 min auf 100°C erwärmt und 15 Stunden bei dieser Temperatur gerührt. Das Rohprodukt wird über eine Flash-Chromatographie-Säule an 600 g Kieselgel mit Hexan /Ethylacetat (19:1) gereinigt. Nach Abdestillieren des Lösungsmittels erhält man 30.7 g orangefarbenes Öl (69% d.Th.). Brechungsindex und Analysenwerte siehe Tabelle I.

Beispiele 2-10

In gleicher Weise wie unter Beispiel 1 beschrieben werden die Verbindungen der Beispiele 2 - 10 aus den entsprechend substituierten (2-Cyclopenten-1-yl)-phenolen und Diisopropyldithiophosphorsäure bzw. Diisobutyldithiophosphorsäure hergestellt. Verbindungen der Formeln II und III werden dabei unter Einsatz von 2 bzw. 3 Aequivalenten der entsprechenden Dithiophosphorsäure dargestellt. Eigenschaften und Analysenwerte der erhaltenen Verbindungen der Formeln I, II und III sind in Tabelle I aufgeführt.

Beispiel 11: Test auf Verschleißschutz

Zur Prüfung auf Eignung als Verschleißschutzadditiv wird die ASTM-Standardmethode D-2783-81 unter Verwendung des Shell-Vierkugelapparates herangezogen. Als Basisöl wird STOCK 305 der Fa. Mobil verwendet, dem die in Tabelle II angegebene Menge an Verbindung gemäß dem jeweils genannten Beispiel zugegeben wird. Ermittelt wird der mittlere Verschleiß-Narben-Durchmesser WSD (Wear-Scar-Diameter) bei einer Last von 20 kg nach einer Stunde Betrieb bei 60°C (in mm).

Tabelle I:

| Beispiel/Formel | $R_1$ | $R_2$ | $R_3$ | Aussehen | $n_D^{20}$ | Analyse berechnet / gefunden C | H | S | P |
|---|---|---|---|---|---|---|---|---|---|
| | | | | | | 59.43 | 8.39 | 14.42 | 6.97 |
| 1/I | t-Bu | Me | i-Pr | orangegelbes Öl | 1.5436 | 58.90 | 8.57 | 14.94 | 7.14 |
| | | | | | | 60.98 | 8.74 | 13.57 | 6.55 |
| 2/I | t-Bu | Me | i-Bu | gelbes, viskoses Öl | 1.5396 | 61.02 | 8.83 | 13.39 | 6.55 |
| | | | | | | 55.65 | 7.52 | 16.50 | 7.97 |
| 3/I | Me | H | i-Pr | grün-graues Öl | 1.5591 | 55.67 | 7.55 | 16.38 | 8.09 |
| | | | | | | 57.67 | 7.99 | 15.39 | 7.44 |
| 4/I | Me | H | i-Bu | grünes Öl | 1.5508 | 57.69 | 8.01 | 15.54 | 7.38 |
| | | | | | | 55.64 | 7.52 | 16.51 | 7.97 |
| 5/I | H | Me | i-Pr | braunes, viskoses Öl | 1.5649 | 55.75 | 7.24 | 16.92 | 8.18 |

Tabelle I: (fortgesetzt)

| Beispiel/Formel | $R_1$ | $R_2$ | $R_3$ | Aussehen | $n_D^{20}$ | Analyse berechnet gefunden | | | |
|---|---|---|---|---|---|---|---|---|---|
| | | | | | | C | H | S | P |
| 6/I | H | Me | i-Bu | gelbes Öl, leicht viskos | 1.5536 | 57.66<br>57.92 | 7.98<br>7.70 | 15.39<br>15.69 | 7.44<br>7.53 |
| 7/II | -- | Me | i-Pr | braunes, viskoses Öl | 1.5600 | 52.07<br>53.79 | 7.53<br>7.16 | 19.17<br>18.34 | 9.26<br>8.72 |
| 8/II | -- | Me | i-Bu | grün-gelbes viskoses Öl | 1.5520 | 54.67<br>54.80 | 8.06<br>8.07 | 17.69<br>17.79 | 8.54<br>8.57 |
| 9/III | -- | -- | i-Pr | braunes, hochviskoses Öl | 1.5609 | 50.08<br>51.07 | 7.44<br>7.38 | 20.57<br>20.32 | 9,94<br>9.66 |
| 10/III | -- | -- | i-Bu | dunkelgelbes, zähes Öl | 1.5512 | 53.02<br>53.96 | 8.01<br>7.79 | 18.87<br>18.41 | 9.11<br>9.05 |

Die erhaltenen Resultate sind in Tabelle II aufgeführt.

Tabelle II:

| Verbindung gemäß Beispiel Nr. | Zusatzmenge | WSD [mm] |
|---|---|---|
| 1 | 1.0 | 0.44 |
| 1 | 0.25 | 0.58 |
| - | | |
| 2 | 1.0 | 0.45 |
| 2 | 0.25 | 0.76 |
| - | | |
| 3 | 1.0 | 0.31 |
| 3 | 0.25 | 0.41 |
| - | | |
| 4 | 1.0 | 0.41 |
| 4 | 0.25 | 0.41 |
| - | | |
| 5 | 1.0 | 0.30 |
| 5 | 0.25 | 0.37 |
| - | | |
| 6 | 1.0 | 0.31 |
| 6 | 0.25 | 0.40 |
| - | | |
| 7 | 1.0 | 0.38 |
| 7 | 0.25 | 0.41 |
| - | | |
| 8 | 1.0 | 0.38 |
| 8 | 0.25 | 0.37 |
| - | | |
| 9 | 1.0 | 0.33 |
| 9 | 0.25 | 0.41 |
| - | | |
| 10 | 1,0 | 0.40 |

Tabelle II: (fortgesetzt)

| Verbindung gemäß Beispiel Nr. | Zusatzmenge | WSD [mm] |
|---|---|---|
| 10 | 0.25 | 0.43 |
| - | | |
| Ohne Wirkstoff | | 0.82 |

Beispiel 12: Test auf Korrosivität gegenüber Kupfer

Die Korrosivität gegenüber Kupfer wird nach der ASTM-Standardmethode D-130 bestimmt. Dazu wird ein polierter Kupferstreifen für drei Stunden in eine auf 120°C gehaltene Probezusammensetzung getaucht. Diese besteht aus dem in Beispiel 11 beschriebenen Basisöl mit zusätzlich 0.03% des handelsüblichen Kupferpassivators 1-Di-(2-ethylhexyl)-aminomethyltolutriazol und, mit Ausnahme der Vergleichsprobe, jeweils 1% der erfindungsgemäßen Verbindung. Anschließend wird der Kupferstreifen aus dem Öl entfernt, gereinigt und beurteilt, wobei die ASTM Copper Strip Corrosion Standards zur Beurteilung herangezogen werden. Die Beurteilung geschieht in vier Stufen:

| | |
|---|---|
| 1 - kein Beschlag | 2 - mäßiger Beschlag |
| 3 - starker Beschlag | 4 - Korrosion, |

wobei innerhalb der Zahlengruppen 1 bis 4 noch auf Grund der Schattenbildung auf den Proben eine Feinunterteilung vorgenommen wird. In der qualitativen Beurteilung A bis E steht dabei die Wertung A vor B, B vor C usw.

In Tabelle III sind die Resultate von 1%igen Lösungen der jeweiligen erfindungsgemäßen Verbindungen in dem oben beschriebenen Basisöl wiedergegeben.

Tabelle III

| Verbindung gemäß Beispiel | Korrosivität |
|---|---|
| 1 | 1B |
| 2 | 1B |
| 3 | 1B |
| 4 | 1B |
| 5 | 1B |
| 6 | 1B |
| 7 | 1B |
| 8 | 1B |
| 9 | 1B |
| 10 | 1B |
| ohne Wirkstoff | 3B |

**Patentansprüche**

**1.** Verbindungen der Formel I, II oder III

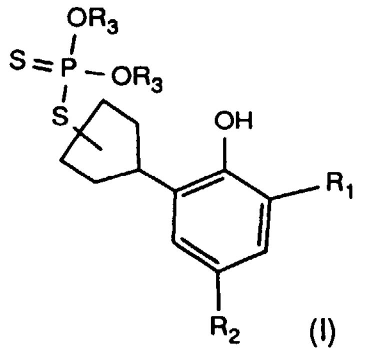

(I)

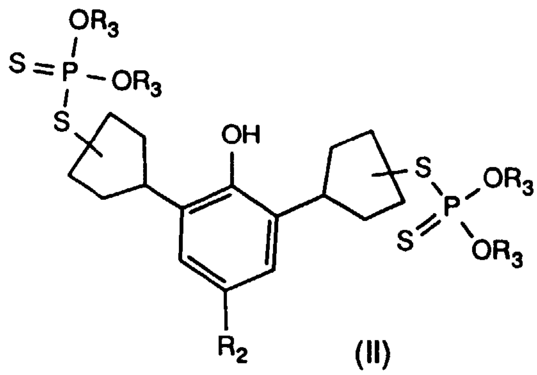

(II)

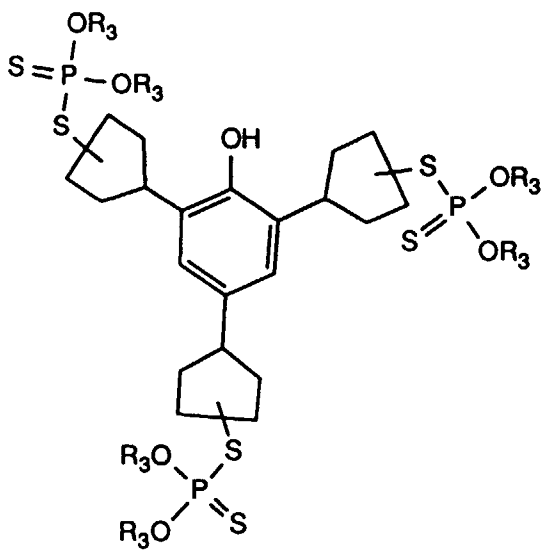

(III)

worin

$R_1$ Wasserstoff, $C_1$-$C_{20}$-Alkyl oder $C_5$-$C_7$-Cycloalkyl,
$R_2$ Wasserstoff, $C_1$-$C_{20}$-Alkyl oder $C_5$-$C_7$-Cycloalkyl und
$R_3$ $C_1$-$C_{18}$-Alkyl oder $C_3$-$C_{18}$-Alkenyl sind.

2. Verbindungen der Formel I gemäß Anspruch 1.

3. Verbindungen nach Anspruch 1, worin

$R_1$ Wasserstoff oder $C_1$-$C_{12}$-Alkyl,
$R_2$ Wasserstoff oder $C_1$-$C_{12}$-Alkyl und
$R_3$ $C_1$-$C_{12}$-Alkyl oder $C_3$-$C_8$-Alkenyl sind.

**4.** Verbindungen nach Anspruch 1, worin $R_1$ und $R_2$ unabhängig voneinander Wasserstoff oder $C_1$-$C_{12}$Alkyl sind und $R_3$ $C_1$-$C_{12}$-Alkyl ist.

**5.** Verbindungen nach Anspruch 4, worin $R_1$ und $R_2$ Wasserstoff oder $C_1$-$C_4$-Alkyl sind und $R_3$ $C_1$-$C_4$-Alkyl ist.

**6.** Zusammensetzungen enthaltend

A) einen Schmierstoff, eine Hydraulik- oder Metallbearbeitungsflüssigkeit und
B) mindestens eine Verbindung der Formel I, II oder III.

**7.** Zusammensetzungen nach Anspruch 6, worin die Komponente A) ein Schmierstoff ist.

**8.** Zusammensetzungen nach Anspruch 7, die zusätzlich weitere Stabilisatoren wie Korrosionsschutzmittel, Rostinhibitoren, Metall-Desaktivatoren, Viskositätsindex-Verbesserer, Dispergiermittel, Antioxidantien, Stockpunkterniedriger, Hochdruck- und Verschleißschutzzusätze enthalten.

**9.** Verwendung von Verbindungen der Formel I, II oder III gemäß Anspruch 1 als Additive für Schmierstoffe, Hydraulik- und Metallbearbeitungsflüssigkeiten.

**10.** Verfahren zur Verbesserung der Gebrauchseigenschaften von Schmierstoffen, Metallbearbeitungs- und Hydraulikflüssigkeiten, dadurch gekennzeichnet, daß diesen Verbindungen der Formel I, II oder III zugesetzt werden.

## Claims

**1.** A compound of formula I, II or III

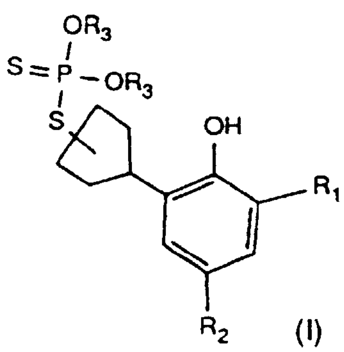

(I)

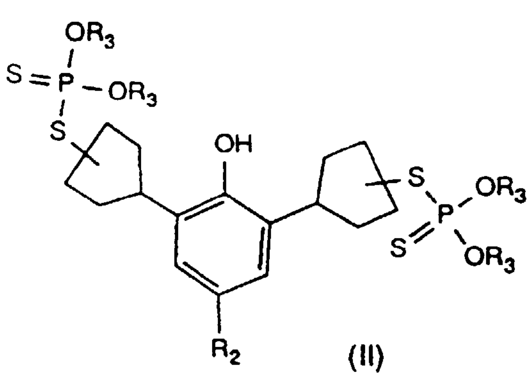

(II)

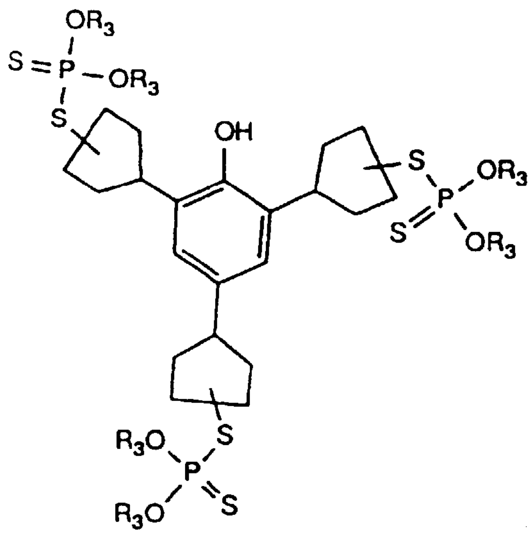

(III)

wherein

$R_1$ is hydrogen, $C_1$-$C_{20}$alkyl or $C_5$-$C_7$cycloalkyl,
$R_2$ is hydrogen, $C_1$-$C_{20}$alkyl or $C_5$-$C_7$cycloalkyl, and
$R_3$ is $C_1$-$C_{18}$alkyl or $C_3$-$C_{18}$alkenyl.

**2.** A compound of formula I according to claim 1.

**3.** A compound according to claim 1, wherein $R_1$ is hydrogen or $C_1$-$C_{12}$alkyl, $R_2$ is hydrogen or $C_1$-$C_{12}$alkyl and $R_3$ us $C_1$-$C_{12}$alkyl or $C_3$-$C_8$alkenyl.

**4.** A compound according to claim 1, wherein $R_1$ and $R_2$ are each independently of the other hydrogen or $C_1$-$C_{12}$alkyl and $R_3$ is $C_1$-$C_{12}$alkyl.

**5.** A compound according to claim 4, wherein $R_1$ and $R_2$ are hydrogen or $C_1$-$C_4$alkyl and $R_3$ is $C_1$-$C_4$alkyl.

**6.** A composition comprising

A) a lubricant, a hydraulic fluid or a metalworking fluid and
B) at least one compound of formula I, II or III.

**7.** A composition according to claim 6, wherein component A) is a lubricant.

**8.** A composition according to claim 7, which additionally comprises further stabilizers such as anti-corrosion agents, rust inhibitors, metal deactivators, viscosity index improvers, dispersants, antioxidants, pour-point depressants and extreme-pressure and antiwear additives.

**9.** Use of a compound of formula I, II or III according to claim 1 as additive for lubricants, hydraulic fluids and metalworking fluids.

**10.** A process for enhancing the performance properties of lubricants, metalworking fluids and hydraulic fluids, which comprises adding thereto a compound of formula I, II or III.

## Revendications

**1.** Composés de formule I, II ou III

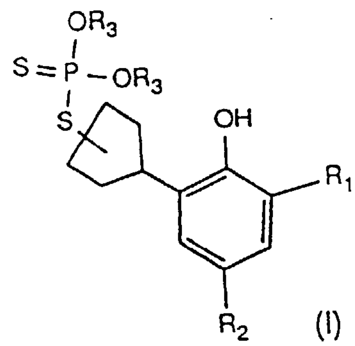

(I)

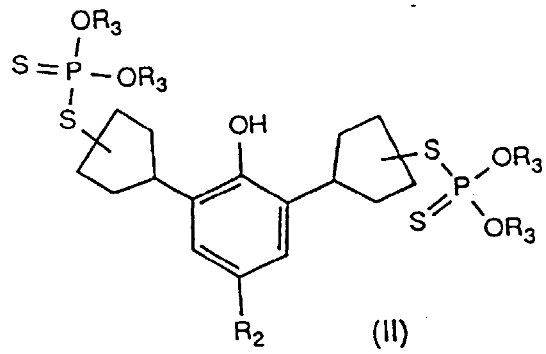

(II)

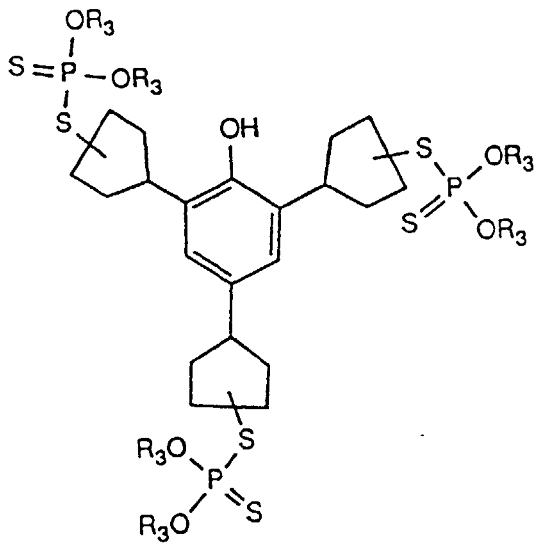

(III)

où

$R_1$ représente l'hydrogène, alkyle en $C_1$-$C_{20}$ ou cycloalkyle en $C_5$-$C_7$,
$R_2$ représente l'hydrogène, alkyle en $C_1$-$C_{20}$ ou cycloalkyle en $C_5$-$C_7$, et
$R_3$ représente alkyle en $C_1$-$C_{18}$ ou alcényle en $C_3$-$C_{18}$.

**2.** Composés de formule I selon la revendication 1.

**3.** Composés selon la revendication 1, où

$R_1$ est l'hydrogène ou alkyle en $C_1$-$C_{12}$,
$R_2$ est l'hydrogène ou alkyle en $C_1$-$C_{12}$, et

$R_3$ est alkyle en $C_1$-$C_{12}$ ou alcényle en $C_3$-$C_8$.

**4.** Composés selon la revendication 1, dans lesquels $R_1$ et $R_2$, indépendamment l'un de l'autre, sont l'hydrogène ou alkyle en $C_1$-$C_{12}$ et $R_3$ est alkyle en $C_1$-$C_{12}$.

**5.** Composés selon la revendication 4, dans lesquels $R_1$ et $R_2$ sont l'hydrogène ou alkyle en $C_1$-$C_4$ et $R_3$ est alkyle en $C_1$-$C_4$.

**6.** Composition contenant

A) un lubrifiant, un fluide hydraulique ou un fluide de travail de métaux et
B) au moins un composé de formule I, II ou III.

**7.** Compositions selon la revendication 6, dans lesquelles le composant A est un lubrifiant.

**8.** Compositions selon la revendication 7, qui contient en plus des stabilisants des agents de protection contre la corrosion, des inhibiteurs de rouille, des désactivateurs de métaux, des agents améliorant l'indice de viscosité, des agents dispersants, des anti-oxydants, des agents abaissant le point de fluage, des additifs haute pression et anti-usure.

**9.** Utilisation des composés de formule I, II ou III selon la revendication 1 en tant qu'additifs pour lubrifiants, fluides hydrauliques et fluides de travail de métaux.

**10.** Procédé pour améliorer les caractéristiques d'utilisation des lubrifiants, des fluides hydrauliques et des fluides de travail de métaux, caractérisé en ce que l'on ajoute à ces substances des composés de formule I, II ou III.